# EUROPEAN PATENT APPLICATION

(11) **EP 1 441 355 A2**
(43) Date of publication of application: **28.07.2004**
(21) Application number: 04001470.6
(22) Date of filing: 23.01.2004
(51) Int. Cl.: G11B 27/32, G11B 20/18

(54) **Management information correction device for recording medium**

(30) Priority: 23.01.2003 JP 2003014841
(71) Applicant: MATSUSHITA ELECTRIC INDUSTRIAL CO., LTD., Kadoma-shi, Osaka 571-8501 (JP)
(72) Inventor: Katsuya, Yoshifumi, Osaka-shi Osaka 547-0012 (JP)
(74) Representative: Grünecker, Kinkeldey, Stockmair & Schwanhäusser Anwaltssozietät

(57) **Abstract**

In a recording medium such as a magneto-optical disc in which playback and recording data is managed with management information, the recording medium and recorded data are relieved by correcting or updating the management information. In a management information correction device for a recording medium, if an abnormality occurs in the management information of a recording medium, the user manipulates a management information correction/updating manipulation section 23 to output correction or updating instruction information. A management information correction/updating control section 22 corrects an abnormal portion of the current management information read from the recording medium and temporarily held in a management information holding section 19, by referring to management information in the initial state stored in a system controller 10.

## Description

### BACKGROUND OF THE INVENTION

The present invention relates to a management information correction device for correcting management information of a recording medium on which playback or recording data and the management information for the data are recorded.

Conventionally, compact discs (CDs) have been used as optical discs for recording music information and various data. In recent years, CD-Rs, minidiscs (MDs) and the like have become widespread as optical discs that have a playback time as long as that of CDs and are information recordable.

For example, in MDs, information is written by a magnetic field modulation overwriting system, in which the power of a laser light beam is enhanced to raise the temperature of the surface of an optical disc to its Curie temperature, and simultaneously a magnetic field having the N or S pole is applied to the portion of a magnetic film of the optical disc irradiated with the light beam with a magnetic head, to thereby record the information.

During playback, when a light beam irradiates on the recorded surface of the optical disc as described above, the light beam undergoes a magnetic Kerr effect due to the influence of the magnetic film of the optical disc. That is, the plane of polarization of the return light is slightly rotated in the normal or reverse direction according to the N or S poles. Two light receiving elements of an optical pickup detect this slight angle of deviation, and a RFIC produces a RF signal by obtaining a sum signal or a difference signal between the outputs of the two light receiving elements, to thereby perform playback.

In the MD system described above, management information called a user table of contents (U-TOC) is recorded on a disc, separately from main data such as music, for managing a region on the disc in which the user has recorded data and a region in which no data has yet been recorded. In recording with a recording apparatus, such a U-TOC is referred to, to determine a recordable region and perform recording in this region. In playback with a playback apparatus, the U-TOC is referred to, to determine a physical position in which information such as music has been recorded and perform playback from this position.

Specifically, in the U-TOC, recorded music tunes and the like are managed in units of tracks, and the start address, the end address, link information and the like are recorded for each unit. A non-recorded region (free area) in which no data has been recorded is regarded as a data recordable region, and the start address, the end address, link information and the like of this region are also recorded.

The MD system is also provided with a variety of edit functions including splitting and linking of recorded data such as music, change of the track number, deletion of a track, entry of the disc title and entry of the track name, to permit the user to create an original disc. Since regions on the disc are managed with the U-TOC, the above edit functions can be easily and swiftly executed without the necessity of directly rewriting the main data such as music.

In recording of a given tune, for example, a recording apparatus refers to the U-TOC to obtain the address of a free area on the disc and determine a physically recordable region, and records music data and the like in this region. In the case of overwriting data while deleting a certain track, the address of the track is obtained with reference to the U-TOC, and music data is recorded on the track.

The MD system described above completes recording for a disc by updating the U-TOC of the disc after the recording is finished, for example. In this relation, power may possibly be turned off unintentionally at a time point at which the U-TOC has not yet been updated, such as during the updating of the U-TOC and during recording of data such as music, and this may cause an abnormal recording state due to the environment of the recording. In such an event, data out of a specified format may be written in the U-TOC, and this may cause occurrence of an abnormality in the U-TOC data. If such an abnormality occurs in the U-TOC data of a disc, a disc error may be detected, or the disc will fail to be identified by the apparatus, when the disc is loaded in a recording/playback apparatus. As a result, subsequent playback or recording operation may not be performed properly. Moreover, once a disc is recognized as not being proper as described above, rewriting of the U-TOC data of the disc and the like in the subsequent editing are no more possible, and thus neither recording nor playback can be performed properly. In reality, however, such a disc is abnormal only in part of the U-TOC data in most cases. In many cases, no abnormality is found in the region in which main data such as music is recorded. Therefore, leaving such a disc as an unusable disc is not only uneconomical, but also will end up abandoning the data recorded by the user.

To solve the above problem, in Japanese Laid-open Patent Publication No. 9-153270, for example, when U-TOC data of a disc becomes abnormal, the disc is relieved by being initialized to make the disc recordable again.

However, in the above publication, although the disc can be relieved, there still remains the problem that data recorded by the user on the disc will be abandoned.

### SUMMARY OF THE INVENTION

An object of the present invention is providing a management information correction device for a recording medium, for restoring a recording medium to a state permitting playback or recording when an abnormality occurs in management information of the recording medium.

To attain the object described above, the management information correction device for a recording medium of the present invention includes: manipulation means for outputting instruction information for correcting or updating management information on playback/recording operation of data recorded on a recording medium; and correction control means for correcting an abnormality of the management information based on management information in the initial state of the recording medium in response to the instruction information from the manipulation means.

Specifically, the management information correction device for a recording medium of the present invention is a management information correction device for a recording medium on which data and management information for managing playback or recording operation of the data are recorded, the device including: correction manipulation means for outputting correction instruction information for correcting the management information under manipulation; management information holding means for holding the management information in the initial state and the management information corresponding to the current recording medium; and correction control means for correcting an abnormal portion of the management information corresponding to the current recording medium held in the management information holding means with reference to the management information in the initial state in response to the correction instruction information from the correction manipulation means.

In the management information correction device for a recording medium of the present invention, preferably, the correction instruction information from the correction manipulation means includes updating instruction information for updating management information on the recording medium, and the correction control means updates the management information on the recording medium to the corrected management information corresponding to the current recording medium in response to the correction instruction information from the correction manipulation means.

In the management information correction device for a recording medium of the present invention, preferably, the management information correction device further includes detection means for detecting the setting state of recording permit/prohibit setting means placed on the recording medium for setting whether recording is permitted or prohibited, wherein the correction control means does not update the management information on the recording medium to the corrected management information corresponding to the current recording medium when the detection means detects that the recording permit/prohibit setting means is in the recording prohibit state.

In the management information correction device for a recording medium of the present invention, preferably, the correction manipulation means can output correction instruction information for selecting whether or not to execute the correction of an abnormal portion of the management information corresponding to the current recording medium held in the management information holding means with reference to the management information in the initial state and the updating of the management information on the recording medium to the corrected management information.

In the management information correction device for a recording medium of the present invention, preferably, the correction instruction information output from the correction manipulation means includes return information for selectively instructing whether or not to return the current management information on the recording medium, which has been updated, to the management information before the updating, the management information holding means keeps holding the current management information from the recording medium, and the management information control means updates the management information on the recording medium and thereafter updates again the management information to the management information before the updating when the return information is included in the correction instruction information from the correction manipulation means.

In the management information correction device for a recording medium of the present invention, preferably, the management information correction device further includes playback manipulation means for outputting playback instruction information instructing playback of data starting from a data recording start position when playback operation based on the management information fails after the correction of the current management information from the recording medium held in the management information holding means, wherein the correction control means performs playback of data starting from the data recording start position on the recording medium in response to the playback instruction information from the playback manipulation means.

In the management information correction device for a recording medium of the present invention, preferably, the management information correction device further includes recording manipulation means for outputting recording instruction information instructing recording of data starting from a data recording start position when recording operation based on the management information fails after the correction of the current management information from the recording medium held in the management information holding means, wherein the correction control means performs recording of data starting from the data recording start position on the recording medium in response to the recording instruction information from the recording manipulation means.

In the management information correction device for a recording medium of the present invention, preferably, when a header address included in the management information corresponding to the current recording medium is abnormal, the header address is corrected to a header address included in the management information in the initial state.

Thus, according to the present invention, in the event that an abnormality occurs in the management information of a recording medium causing failure in data playback or recording, the user manipulates the correction manipulation means to output correction instruction information for control of the correction control means. With this control, an abnormal portion of the management information read from the recording medium and held in the management information holding means, such as a header address, for example, can be corrected based on the management information in the initial state. That is, the recording medium can recover the state permitting playback or recording.

According to the present invention, in the event that an abnormality occurs in the management information of a recording medium, in addition to the correction of the management information read from the recording medium and held in the management information holding means, the management information having the abnormality on the recording medium itself can be updated to the corrected management information. The resultant recording medium can be made to allow playback or recording not only with the current playback/recording apparatus but also with other playback/recording apparatuses.

According to the present invention, whether recording is permitted or prohibited may be checked with the detection means for detecting the setting state of the recording permit/prohibit setting means placed on a recording medium. This prevents accidental updating of the management information on the recording medium.

According to the present invention, it is possible to select the correction of the management information held in the management information holding means and the updating of the management information on the recording medium as described above, under manipulation by the user. This increases the degree of freedom of selection by the user. For example, this makes it possible to shift to playback operation only after correcting the management information held in management information holding means without rewriting the management information on recording medium, or check the management information on the recording medium before updating.

According to the present invention, after the updating of the management information, the management information before the updating can be resumed by keeping holding the management information before the updating. This also increases the degree of freedom for the user.

In the event that an abnormality occurs in the management information in the management information holding means or that on the recording medium while no abnormality is found in data itself, the management information having the abnormality is corrected to the management information in the initial state. However, if information indicating the data recording position on the current recording medium is abnormal, data playback and recording operation will not be performed. According to the present invention, there are provided a playback manipulation means that permits selection of whether or not to start playback of data from the data recording start position, and a recording manipulation means that permits selection of whether or not to start recording from the data recording start position. This makes it possible to perform playback and recording from the data recording start position.

### BRIEF DESCRIPTION OF THE DRAWINGS

FIG. **1** is a block diagram of a playback/recording apparatus equipped with a management information correction device for a recording medium of an embodiment of the present invention.
FIG. **2** is a view showing a configuration of TOC sector 0 of an MD system.
FIG. **3** is a view showing a configuration of U-TOC sector 0 of an MD system.
FIG. **4** is a view illustrating a link form in the U-TOC sector 0 of the MD system.
FIG. **5** is a view illustrating header sync and header address states observed when the header of the U-TOC sector 0 of the MD system is composed of data of all "0".
FIG. **6** is a block diagram of a management information correction device for a recording medium of Embodiment 1 of the present invention.
FIG. **7** is a block diagram of a management information correction device for a recording medium of Embodiment 2 of the present invention.
FIG. **8** is a block diagram of a management information correction device for a recording medium of Embodiment 3 of the present invention.
FIG. **9** is a block diagram of a management information correction device for a recording medium of Embodiment 5 of the present invention.
FIG. **10** is a view illustrating an area structure of an MD and the management state thereof.
FIG. **11** is a block diagram of a management information correction device for a recording medium of Embodiment 6 of the present invention.
FIG. **12** is a block diagram of a management information correction device for a recording medium of Embodiment 7 of the present invention.

### DESCRIPTION OF THE PREFERRED EMBODIMENTS

Hereinafter, preferred embodiments of the present invention will be described with reference to the accompanying drawings.

### (Embodiment 1)

The management information correction device for a recording medium of Embodiment 1 will be described as being implemented as a function installed in a playback apparatus or a playback/recording apparatus using an MD, a magneto-optical disc, as the recording medium.

First, the construction of a playback/recording apparatus will be described.

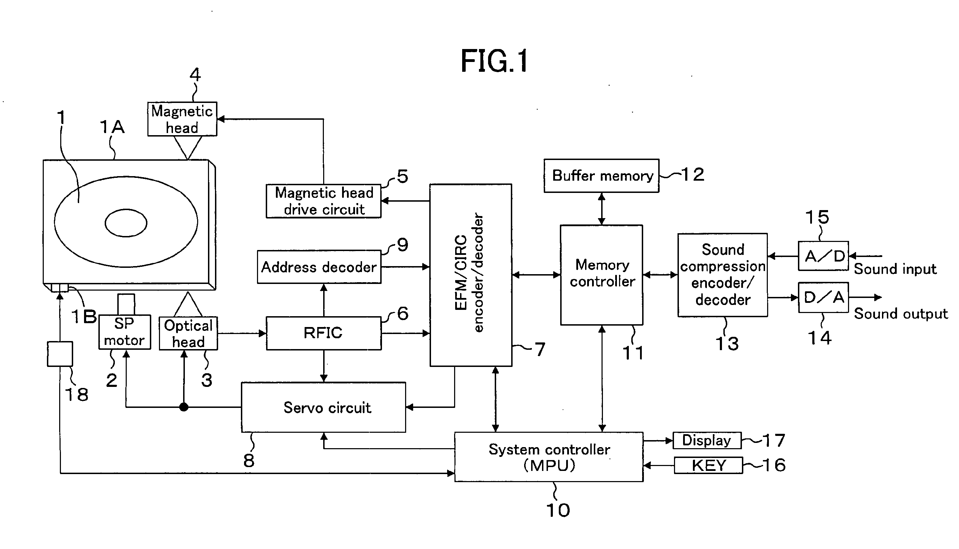

FIG. **1** is a block diagram of main components of a playback/recording apparatus in this embodiment. A disc **1**, on which sound data has been recorded, is placed in a disc cartridge **1A**. The disc cartridge **1A** has a safety lug **1B** for setting whether recording is permitted or prohibited for the disc. The disc **1** is rotated with a spindle motor **2**, and is irradiated with laser light with an optical head **3** during playback/recording.

The optical head **3** outputs high-level laser light for heating the surface of the disc up to its Curie temperature during recording, and outputs comparatively low-level laser light to enable detection of data from reflected light using the magnetic Kerr effect during playback. Hence, the optical head **3** is provided with a laser diode as a laser emitting means, an optical system composed of a polarization beam splitter, an object lens and the like, and a detector for detecting reflected light.

A magnetic head **4** is placed at a position facing the optical head **3** with the disc **1** therebetween. The magnetic head **4**, driven with a magnetic head drive circuit **5**, applies a magnetic field modulated with input data to the disc **1**. The optical head **3** and the magnetic head **4** are movable in the directions of the radius of the disc **1** with a sled mechanism not shown.

In playback operation, information detected from the disc **1** with the optical head **3** is input into a RFIC **6**. The RFIC **6** performs I/V conversion and amplification/computation for the input information, to extract playback RF signals, various signals required for servo control such as signals for focusing/tracking, groove information (absolute position signals recorded on the disc **1** as pre-grooves (wobbling grooves)) and the like. The playback RF signals extracted by the RFIC **6** are input into an EFM/CIRC encoder/decoder **7**. The various signals for focusing/tracking and the like required for servo control are input into a servo circuit **8**, and the groove information is input into an address decoder **9**.

The servo circuit **8** performs computation with the signals required for servo control sent from the RFIC **6**. The servo circuit **8** generates various servo drive signals for control of focusing servo, tracking servo, sled servo, spindle servo and the like according to a focusing control instruction, an access instruction, a spindle rotation control instruction and the like sent from a system controller **10** composed of a microcomputer, to thereby control the optical head **3** for focusing, tracking and sled control, and control the spindle motor **2** for spindle control.

The address decoder **9** decodes the input groove information to extract address information. The address information is read by the system controller **10** to be used for control operation such as access control. The EFM/CIRC encoder/decoder **7** performs decoding processing such as EFM demodulation and CIRC for the playback RF signals. During this processing, header addresses, sub-codes and the like contained in the playback RF signals as data are also extracted and read by the system controller **10**.

Sound data obtained as a result of the decoding processing such as EFM demodulation and CIRC by the EFM/CIRC encoder/decoder 7 is temporarily written in a buffer memory **12** with a memory controller **11**. The rate at which data is read from the disc **1** with the optical head **3** and the playback data is transferred through the system from the optical head **3** to the buffer memory **12** is about 1.4 Mbits/s when the spindle linear velocity (CLV) is 1x speed, and the transfer is performed intermittently with control of the volume of the sound data written in the buffer memory **12**.

The data written in the buffer memory **12** is sent to a sound compression encoder/decoder **13** every time a predetermined amount of data has accumulated under instructions from the system controller **10**. The compressed data is subjected to playback signal processing such as decoding according to the mode of recording, then converted to analog signals with a D/A converter **14**, and output via an amplification circuit not shown for playback. For example, the data is output as L and R analog audio signals. Note that the rate at which the playback data read from the buffer memory **12** is transferred through the sound compression encoder/decoder **13** is about 0.3 Mbits/s, and the transfer is performed continuously during playback.

In recording operation for the disc **1**, recording signals (for example, analog audio signals) are converted to digital data with an A/D converter **15**, and then sent to the sound compression encoder/decoder **13**, where the mode of recording is determined under instructions from the system controller **10**, and the data is subjected to sound compression encoding. The recording data compressed with the sound compression encoder/decoder **13** is temporarily stored in the buffer memory **12** via the memory controller **11.** The data in the buffer memory **12** is sent to the EFM/CIRC encoder/decoder **7** every time a predetermined amount of data has accumulated in the buffer memory **12** under instructions from the system controller **10**. The data is encoded using CIRC, EFM and the like with the EFM/CIRC encoder/decoder **7**, and then sent to the magnetic head drive circuit **5**.

The magnetic head drive circuit **5** sends a magnetic head drive signal to the magnetic head **4** according to the encoded recording data. In response to this signal, the magnetic head **4** applies a magnetic field of N or S to the disc **1**. During this application, the laser output of the optical head **3** is controlled to maintain high-level output. With the interposition of the buffer memory **12,** recording of the sound data input continuously is performed intermittently.

A keyboard **16** as a manipulation section has various keys used for manipulation by the user, such as REC key, PLAY key, STOP key, CUE key and REV key, and the key manipulation information is sent to the system controller **10**. A display section **17** is composed of an LCD, for example, for displaying the operation state, the track number, the track mode, play time information and the like under control of the system controller **10.**

A safety lug detection section **18** is composed of a mechanism of detecting the setting state of the safety lug **1B** of the disc cartridge **1A** for the disc **1**, and sends a detection signal to the system controller **10.**

In playback/recording operation for the disc **1**, management information recorded on the disc 1, that is, the table of contents (TOC) and the user table of contents (U-TOC) must be read. The system controller **10** detects a recordable area on the disc **1** and the address information of the track to be played back with reference to the management information. The management information is held in the buffer memory **12,** for example. The buffer memory **12** is therefore divided into a buffer area for storing the recording data and the playback data described above and an area for holding the management information. The system controller **10** reads the management information by controlling the optical head **3** to access a position near the innermost of the disc 1 on which the management information has been recorded when the disc **1** is loaded and executing playback, and stores the read management information in the buffer memory **12** so as to be referred to during subsequent playback/recording for the disc **1**.

The U-TOC is edited and rewritten with recording and deletion of data. The system controller **10** edits U-TOC information stored in the buffer memory **12** every time recording/deletion of data is performed, and also rewrites the U-TOC area of the disc **1** at a predetermined timing according to the rewrite operation (generally, prior to unloading of the disc).

Hereinafter, as the management information for managing playback/recording of tracks of the disc **1**, TOC sectors will be described. The TOC information includes designation of areas on the disc such as a recordable area, management of the U-TOC area and the like. When the disc **1** is a read-only optical disc, the TOC information is in the ROM form permitting even management of tunes.

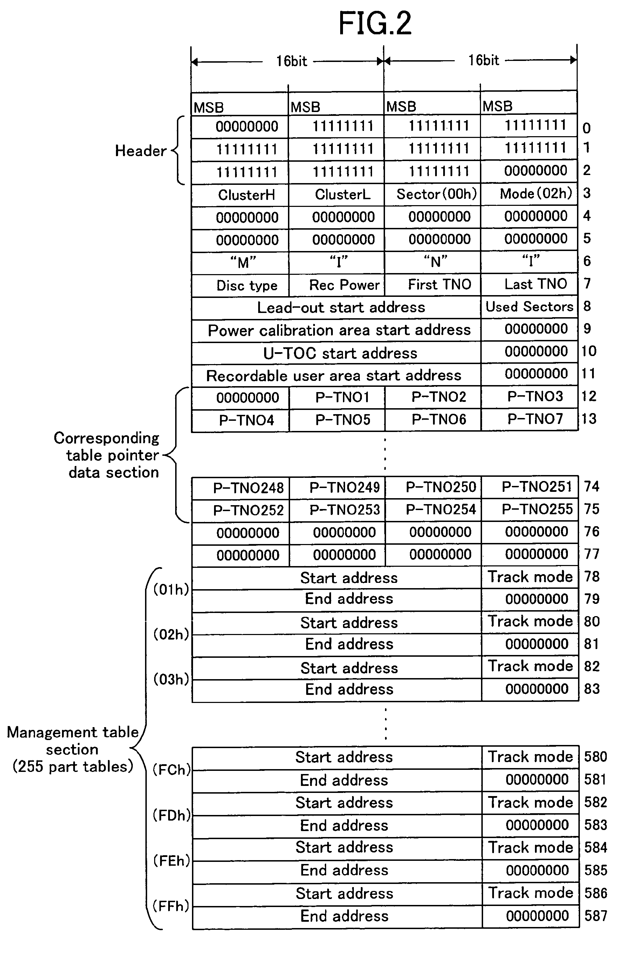

FIG. **2** shows one sector (sector 0) of TOC information repeatedly recorded in the TOC region (for example, a ROM area located innermost of the disc). As the TOC sectors, there exist sectors 0 to 4, in which sectors 1 to 4 are options.

The data region (4 bytes × 588 = 2352 bytes) of the TOC sector 0 includes a header of a total of 16 bytes at the head thereof The header of this sector is composed of a total of 12 bytes of sync patterns each made of 1-byte data of all 0's or all 1's and 4 bytes of addresses indicating a cluster address and a sector address and the like. Following the header, ASCII code identification ID corresponding to the character string "MINI" is given at predetermined address positions, indicating that this is the TOC region.

Subsequently recorded are the disc type, the recording laser power level, the first tune number (First TNO), the last tune number (Last TNO), the lead-out start address, the power calibration area start address, the U-TOC start address, the recordable user area start address and the like.

A corresponding table pointer data section follows the above information, which has table pointers (P-TNO1 to P-TNO255) for associating tunes and the like recorded in the form of bits with part tables in a management table section to follow.

The management table section occupies the region subsequent to the corresponding table pointer data section, and has 255 part tables (01h) to (FFh) to be associated with the table pointers (P-TNO1 to P-TNO255). Note that as used herein the numbers with the suffix "h" are those in hexadecimal notation. Each part table includes a region capable of recording the start address at which a part starts, the end address at which the part ends, and track mode information of the part.

The track mode information of each part table includes information on whether or not overwrite protection and data copying prohibition have been set for the part, audio information or not, the ATRAC recording mode (ATRAC1 SP, ATRAC3 LP2, ATRAC3 LP4) and the like.

The contents of the part tables (01h) to (FFh) in the management table section are revealed by the table pointers (P-TNO1 to P-TNO255).

More specifically, for the first tune, the table pointer P-TNO1 designates a certain part table (for example, (01h)) in which the start address is the start address of the location in which the first tune has been recorded, the end address is the end address of this location, and the track mode information is information on the first tune. Actually, each table pointer includes a value that can specify a part table as a byte position in the TOC sector 0, obtained by predetermined computation.

Likewise, for the second tune, in a part table (for example (02h)) designated by the table pointer P-TNO2, the start address, the end address and the track mode information of the location in which the second tune has been recorded are shown.

Such table pointers are prepared up to table pointer P-TNO255, so that up to 255 tunes can be managed in the TOC. By forming the TOC sector 0 in the manner described above, a given tune can be accessed and played back during playback of a read-only optical disc, for example.

As for a disc permitting playback/recording, which has no prerecorded tune area, the corresponding table pointer data section and the management table section described above are not used (which are managed under U-TOC information to be described later). Accordingly, the bytes are all "00h" . Note that in a read-only disc in which all tunes have been recorded in the bit format, the corresponding table pointer data section and the management table section are used for management of tunes.

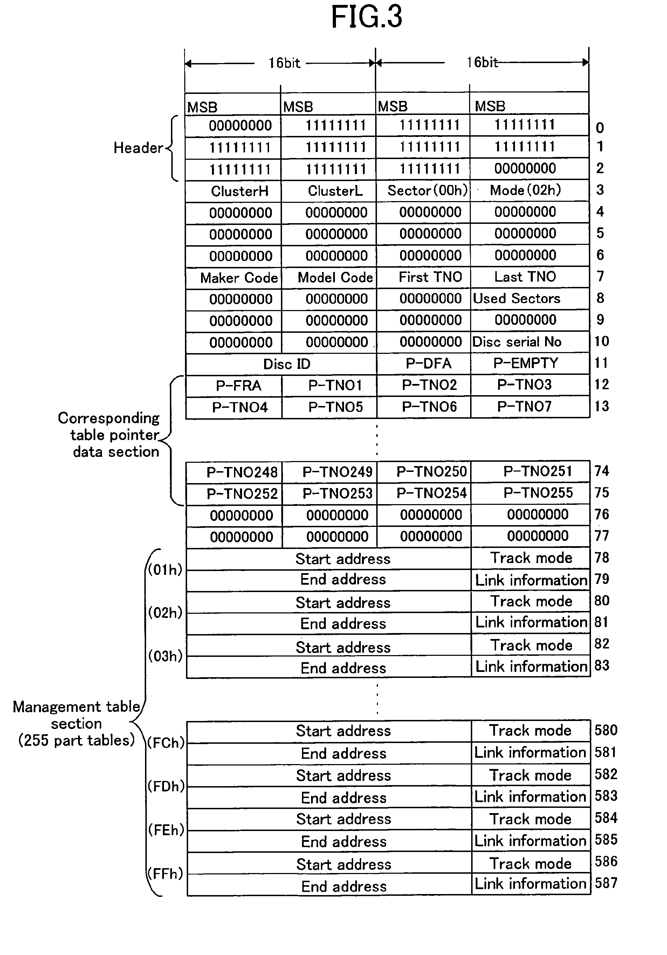

Next, a U-TOC sector will be described. FIG. **3** shows a format of U-TOC sector 0. As the U-TOC sectors, sectors 0 to 4 can be provided, where sectors 1 and 4 are allocated as areas for recording character information and sector 2 as an area for recording the day/time of recording. Herein, only U-TOC sector 0 that is always necessary for playback/recording of the disc **1** will be described. The U-TOC sector 0 is a data region in which management information mainly on a tune recorded by the user and a free area in which a new tune is recordable has been recorded.

For example, in recording of a given tune on the disc **1**, the system controller **10** detects a free area on the disc from the U-TOC sector 0 and records sound data in this area. In playback, the system controller **10** detects an area in which a desired tune has been recorded from the U-TOC sector 0, accesses the area, and plays back the tune.

The data region (4 bytes × 588 = 2352 bytes) of the U-TOC sector 0 includes a header of a total of 16 bytes at the head thereof. The header of this sector is composed of a total of 12 bytes of sync patterns each made of 1-byte data of all 0's or all 1's and 4 bytes of addresses such as a cluster address and a sector address, mode information and the like.

The sector as used herein is a data unit of 2352 bytes, and 36 sectors constitute one cluster. Sync patterns and addresses are recorded for each unit, not only in the U-TOC sector 0, but also in the TOC sector described above and data sectors in which music data is actually recorded. The cluster address is expressed in 2 bytes of the high-level address (Cluster H) and the low-level address (Cluster L), and the sector address (Sector) is expressed in 1 byte.

Subsequently, the maker code and the model code are given in their predetermined byte positions, and then the first tune number (First TNO) and the last tune number (Last TNO) are given in their 1-byte regions according to the number of tracks used for recording. Normally, the first tune number (First TNO) is "01h". The last tune number (Last TNO) is rewritten according to the number of tracks used for recording. The sector use state (Used Sectors), the disc serial No., the disc ID and the like then follow.

The sector further includes a corresponding table pointer data section as a region in which various table pointers (P-DFA, P-EMPTY, P-FRA, P-TNO1 to P-TNO255) are recorded, for identifying regions of tracks (tunes and the like) recorded by the user, free areas and the like by associating these with a management table section to follow.

The management table section associated with the table pointers (P-TNO1 to P-TNO255) includes 255 part tables (01h) to (FFh). Each part table includes the start address at which a certain part starts, the end address at which the part ends, and track mode information of the part. In addition, for the case of a part represented by a part table being sequentially linked to another part, the part table also includes link information in which the start address and end address of the part to be linked are recorded. The part as used herein refers to a track portion in which a temporally continuous unit of data is recorded physically continuously in one track.

In a playback/recording apparatus of the type described above, even when data of one tune is recorded physically discontinuously in a plurality of parts, playback will be made by being linked between the parts without causing any problem. Accordingly, in recording of a tune by the user, for example, the tune may be recorded in a plurality of parts from the standpoint of effective use of the recordable area.

Link information is provided for the reason described above, in which any of the part table numbers (01h) to (FFh) is given to specify the part table to be linked, to enable linking of part tables. In other words, in the management table section of the U-TOC sector 0, one part table represents one part, and for a tune composed of linking of three parts, for example, the part position of the tune is managed with the three part tables linked to one another via the link information. The actual link information is a value specifying a byte position in the U-TOC sector 0, obtained by predetermined computation. That is, a part table is specified by calculating 304 + (link information) × 8 (8th byte).

The part tables (01h) to (FFh) in the management table section of the U-TOC sector 0 give the details of the respective parts by being designated by the table pointers (P-DFA, P-EMPTY, P-FRA, P-TN1 to P-TNO255) as follows.

The table pointer P-DFA indicates a defect region on the disc **1**, designating a part table or the head part table among a plurality of part tables representing a track portion (part) or track portions (parts) determined as a defect region due to a flaw and the like. In other words, if a defect region exists on the disc 1, any of (01h) to (FFh) is given as the table pointer P-DFA, and the corresponding part table indicates the physical start position (start address) and end position (end address) of the defect part. If another defect part exists, the part table designates as link information another part table that also represents a defect part. If no other defect part exists, "00h", for example, is given as the link information, indicating that no more link exists.

The table pointer P-EMPTY designates an unused part table or the head part table among unused part tables in the management table section. If an unused part table exists, any of (01h) to (FFh) is given as the table pointer P-EMPTY. If a plurality of unused part tables exist, such part tables are sequentially designated via the link information from the part table first designated by the table pointer P-EMPTY. In this way, all unused part tables are linked and managed on the management table.

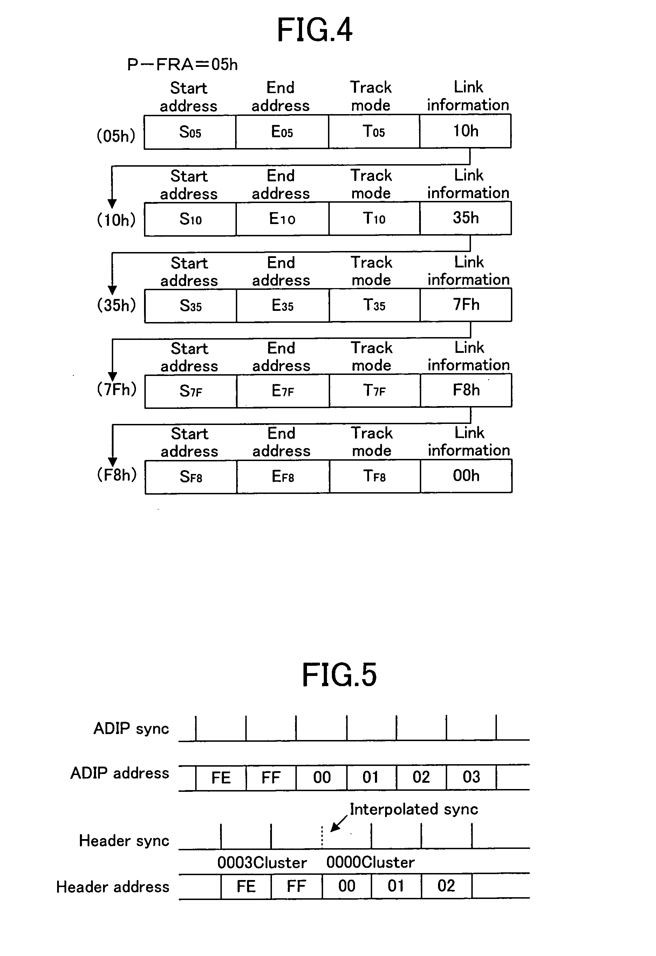

The table pointer P-FRA indicates a data writable free area (including a data deleted region) on the disc **1**, designating a part table or the head part table among a plurality of part tables representing a track portion (part) or track portions (parts) usable as a free area. In other words, if a free area exists on the disc **1**, any of (01h) to (FFh) is given as the table pointer P-FRA, and the corresponding part table includes the physical start position (start address) and end position (end address) of the part as a free area. If a plurality of such part tables exist, such part tables are sequentially designated via the link information from the part table first designated by the table pointer P-FRA, until the part table of which link information is "00h". FIG. **4** diagrammatically shows how parts usable as free areas are managed using part tables. Specifically, when parts (05h), (10h), (35h), (7Fh) and (F8h) are free areas, these areas are managed first by the table pointer P-FRA and then by the linking among the part tables (05h), (10h), (35h), (7Fh) and (F8h). This management style also applies to the defect regions and unused part tables described above.

The table pointers P-TNO1 to P-TNO255 designate tracks of tunes and the like recorded on the disc **1** by the user. For example, the table pointer P-TNO1 designates a part table representing a part or the temporally head part among a plurality of parts in which data of the first track has been recorded. In the case that a tune as the first track has been recorded in one part with no splitting of the track on the disc, for example, the recorded region of the first track is represented by the start address and the end address in the part table designated by the table pointer P-TNO1. Also, in the case that a tune as the second track has been recorded discretely in a plurality of parts on the disc, for example, the parts are designated in the temporal sequential manner to give the recorded positions of the second track. In other words, part tables are sequentially designated in the temporal order via the link information from the part table first designated by the table pointer P-TNO2, until the part table of which link information is "00h" (as in the manner shown in FIG. **4**). In this way, all parts in which the data constituting the second tune has been recorded, for example, are sequentially designated. Accordingly, during playback of the second tune or during overwriting of the regions of the second tune, it is possible to retrieve music information continuously from discrete parts, or record data with efficient use of recording areas, using the data of the U-TOC sector 0, with manipulation of the optical head **3** and the magnetic head **4**.

As the track mode information provided in each part table, 8 bits of one byte allocated for the track mode indicate individual predetermined states. Specifically, among 8 data bits d1 to d8, data d1, which is "0" or "1", indicates the state of write protection (recording prohibited). Data d2, which is "0" or "1", indicates the ON or OFF state of copyright protection. Data d3 indicates whether the track is original data or copy data of the second or higher generation. Data d4 indicates that the part is audio data when it is "1". Data d5, d6 and d7 indicate the recording mode of ATRAC (ATRAC1 SP, ATRAC3 LP2, ATRAC3 LP4) and mono/stereo. Data d8 indicates emphasis information.

With the U-TOC sector 0 having the configuration described above, it is possible to manage the addresses of the regions required for playback/recording operation with the disc **1**. In addition, by updating the U-TOC sector 0, splitting, linking and deletion of tracks and interchange of track numbers can be realized.

For the disc having the management data form described above, the playback/recording apparatus in this embodiment attempts to correct U-TOC data when the data is corrupted, that is, when predetermined data is not found at a right position, to thereby relieve the disc, which will otherwise be determined as disc error and fail to be used for playback. Hereinafter, this correction operation will be described.

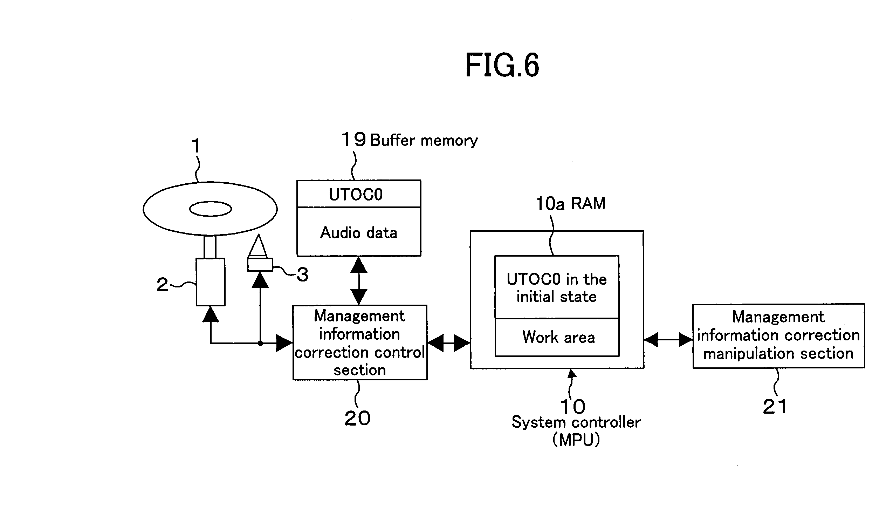

FIG. **6** is a block diagram of a management information correction device for a recording medium of this embodiment.

In the management information correction device for a recording medium of FIG. **6**, the reference numerals **1, 2** and **3** respectively denote the magneto-optical disc (recording medium), the spindle motor for rotating the disc **1**, and the optical head for emitting laser light to the disc **1** for playback and recording. A buffer memory **19** temporarily holds management information of the U-TOC sector 0 of the disc **1**, that is, management information of the current recording medium when the disc **1** is loaded in the apparatus. A management information correction control section (correction control means) **20** corrects an abnormal portion of the U-TOC sector 0 held in the buffer memory **19** if an abnormality is found in the U-TOC sector 0. A management information correction manipulation section (correction manipulation means) **21** outputs correction instruction information for correcting the management information under manipulation by the user. The system controller **10**, which has a RAM **10a** for storing the information of the U-TOC sector 0 in the initial state, receives the correction instruction information from the management information correction manipulation section **21**, and outputs a signal to the management information correction control section **20** for instructing correction of an abnormal portion of the management information of the disc **1** held in the buffer memory **19**, as well as operation of the spindle motor **2** and the optical head **3**. The buffer memory **19** and the RAM **10a** of the system controller **10** constitute a management information holding means.

In the playback/recording apparatus in this embodiment, when the disc **1** is loaded, the management information of the U-TOC sector 0 is first written in the buffer memory **19** for temporary holding. If the header of the U-TOC sector 0 includes abnormal data of all "00h", for example, the cluster address of the U-TOC sector 0 is "0000h" as shown in FIG. **5**, which is different from the normal address. In this event, an address error is normally issued, and this U-TOC sector 0 is no more referred to.

In the playback/recording apparatus in this embodiment, however, if such an address error occurs, the user enters correction instruction information in the system controller **10** via the management information correction manipulation section **21** so as to correct the management information. The RAM **10a** of the system controller **10** stores in advance the management information data of the U-TOC sector 0 in the initial state, which corresponds to that of a blank disc, as shown in FIG. **6**. The management correction control section **20** compares the abnormal management information data of the U-TOC sector 0 held in the buffer memory **19,** which has been read from the disc **1**, with the data stored in the RAM **10a,** and corrects the U-TOC sector 0 held in the buffer memory **19** so that the header addresses are located at their normal positions.

As described above, in this embodiment, a disc conventionally failing in playback due to a read error of the header information of the U-TOC sector 0 and the like can be played back by correcting the data of the U-TOC sector 0.

### (Embodiment 2)

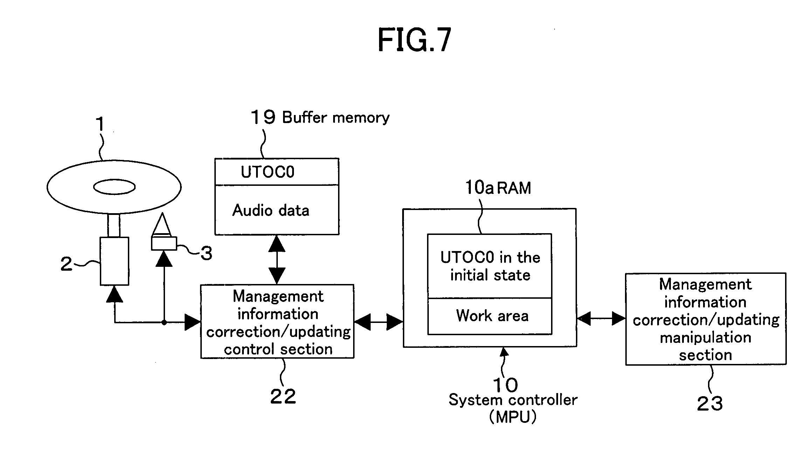

FIG. **7** is a block diagram of a management information correction device for a recording medium of Embodiment 2.

In this embodiment, the management information correction control section **20** of the management information correction device of Embodiment 1 shown in FIG. **6** is replaced with a management information correction/updating control section (correction control means) **22** that can update the management information on the recording medium to new management information held in the buffer memory **19**. Also, the management information correction manipulation section **21** in FIG. **6** is replaced with a management information correction/updating manipulation section (correction manipulation means) **23** that outputs correction instruction information or updating instruction information for updating the management information on the disc **1** to the management information correction/updating control section **22** via the system controller **10** under manipulation by the user.

In this embodiment, after the management information of the U-TOC sector 0 held in the buffer memory **19** has been corrected to normal values as described in Embodiment **1**, the management information correction/updating manipulation section **23** outputs instruction information for updating the management information on the disc **1** to the system controller **10** under manipulation by the user. In response to this, the system controller **10** outputs updating instruction information to the management information correction/updating control section **22.** The management information correction/updating control section **22** then updates the management information of the U-TOC sector 0 on the disc **1** to the corrected normal management information held in the buffer memory **19.**

Accordingly, in this embodiment, in a disc conventionally failing in playback or recording due to a read error of the header information of the U-TOC sector 0 and the like, the management information data of the U-TOC sector 0 on the disc is updated to normal management information data. Thus, the disc can now be used for playback and recording with not only the playback/recording apparatus in this embodiment but also with other playback/recording apparatuses.

### (Embodiment 3)

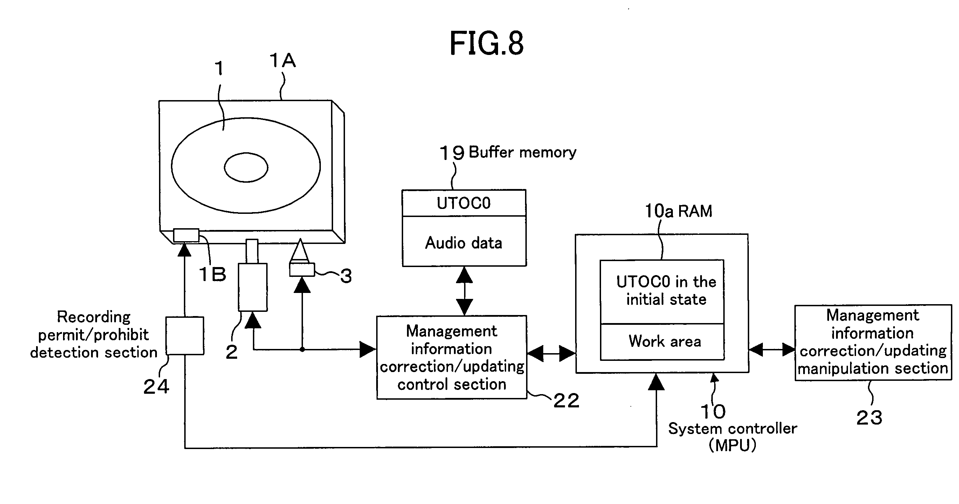

FIG. **8** is a block diagram of a management information correction device for a recording medium of Embodiment 3.

In this embodiment, a recording permit/prohibit detection section (detection means) **24** is provided, which detects the setting state of the safety lug (recording permit/prohibit setting means) **1B** placed on the disc cartridge **1A** (recording medium) for setting whether recording is permitted or prohibited, and outputs the detection result to the system controller **10**, to thereby prevent accidental deletion of data on the disc.

In this embodiment, in the case that the management information of the U-TOC sector 0 held in the buffer memory **19** has been corrected to normal values as described in Embodiment 1, when the management information correction/updating manipulation section **23** outputs instruction information for updating the management information on the disc **1** to the system controller **10** under manipulation by the user, the system controller **10** determines whether or not the safety lug **1B** of the currently loaded disc **1** is in the recording permit state based on the detection signal from the recording permit/prohibit detection section **24.** If the safety lug **1B** of the disc **1** is in the recording permit state, the management information data of the U-TOC sector 0 on the disc **1** is updated. If it is in the recording prohibit state, the management information data of the U-TOC sector 0 on the disc **1** is not rewritten.

Accordingly, in this embodiment, the management information on a disc can be prevented from being deleted accidentally during updating of the management information, as is done during recording of data.

### (Embodiment 4)

In a management information correction device for a recording medium of Embodiment 4, the management information correction/updating manipulation section **23** in FIG. 7 is provided with a function of permitting the user to select the operation to be executed, the correction of the U-TOC sector 0 held in the buffer memory **19** or the updating of the U-TOC selector 0 on the disc **1** described in Embodiment 2.

In this embodiment, in the correction or updating of the management information as described in Embodiment 2, the user can select whether the correction or updating of the management information is actually executed with the management information correction/updating manipulation section **23**. Only when the user selects execution of the correction or updating, the management information correction/updating manipulation section **23** outputs the instruction information to the system controller **10**, the system controller **10** outputs the correction or updating instruction information to the management information correction/updating control section **22**, and the management information correction/updating control section **22** corrects the U-TOC sector 0 held in the buffer memory **19** or updates the U-TOC sector 0 on the disc **1**.

Accordingly, in this embodiment, there is provided a mechanism permitting the user to select whether only correction is performed or even updating is performed at the occasion of correction and updating of the management information. This increases the degree of freedom of selection by the user. For example, this makes it possible to shift to playback operation only after correcting the management information held in the buffer memory **19** without rewriting the management information on the disc **1**, or check the management information on the disc **1** before being updated.

### (Embodiment 5)

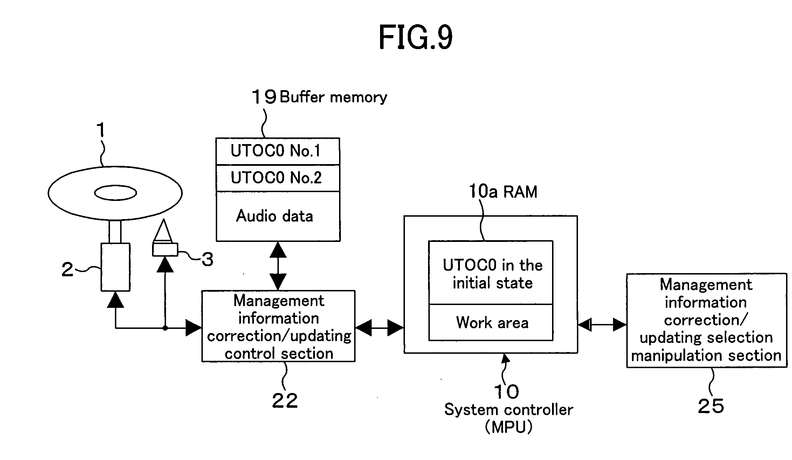

FIG. **9** is a block diagram of a management information correction device for a recording medium of Embodiment 5.

In this embodiment, even after the updating of the U-TOC sector 0 on the disc **1** in Embodiment 2, the management information before the updating is kept held in the buffer memory **19**. In addition, a management information correction/updating selection manipulation section (correction manipulation means) **25** is provided, which outputs instruction information (return information) for selectively instructing whether or not the management information on the recording medium should be returned to the management information before the updating based on the selection by the user.

In this embodiment, as shown in FIG. **9**, a one-sector region is secured separately from the region for holding the management information of the U-TOC sector 0 read from the disc **1**. The correction is made for one region, while the original information of the U-TOC sector 0 before the correction is kept held in the other region.

Thus, when receiving instruction information for returning the management information of the U-TOC sector 0 to the one before the correction from the management information correction/updating selection manipulation section **25**, the management information correction/updating control section **22** updates again the updated management information on the disc **1** to the information of the U-TOC sector 0 held uncorrected in the buffer memory **19**.

Accordingly, in this embodiment, the user can return the management information to the uncorrected management information arbitrarily after the updating of the management information. This increases the degree of freedom for the user.

### (Embodiment 6)

In a management information correction device of Embodiment 6, when an abnormality, which cannot be corrected in the manner described in Embodiment 1, occurs in the management information, playback is forcibly performed under manipulation by the user. Corruption of data, which cannot be corrected in the manner described in Embodiment 1, may occur in the management table section composed of 255 part tables as shown in FIG. **3**. For example, predetermined data may be missing at a normal position. Also, the start address or the end address may be invalid although data should have been actually recorded. In such cases, playback and recording based on the U-TOC sector 0 are impossible because no physical positions from which playback and recording are desired are known. In this embodiment, data can be forcibly played back in these cases.

In general, when data in the management table section is corrupted as described above, it is only data in the U-TOC sector 0 that is corrupted, and a recordable user area in which music information and the like are actually recorded is not physically damaged with data being kept normal in many cases. This embodiment utilizes this fact.

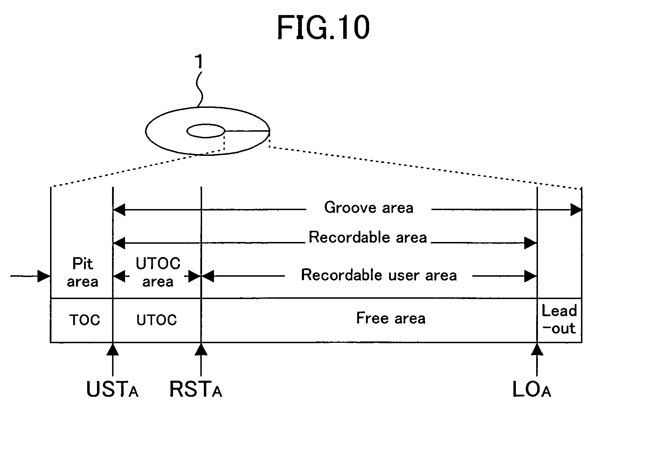

FIG. **10** diagrammatically shows the area structure of a disc in the radial direction. The disc of the type used in this embodiment is largely divided into an area in which data has been recorded in the form of embossed bits as shown as a pit area and a groove area in which grooves are formed as a magneto-optical area. In the pit area, the TOC described with reference to FIG. **2** has been recorded repeatedly. In the TOC, the position of the U-TOC is given as the U-TOC start address USTA. The lead-out start address LOA, the recordable user area start address RSTA and the like are also given. The groove area follows the pit area located innermost of the disc **1**. In the groove area, the recordable area in which recording is permitted ranges up to the address indicated in the TOC as the lead-out start address LOA. The remaining portion of the groove area is a lead-out area. In the recordable area, the recordable user area actually used for recording of data such as music ranges from the recordable user area start address RSTA up to immediately before the lead-out start address LOA.

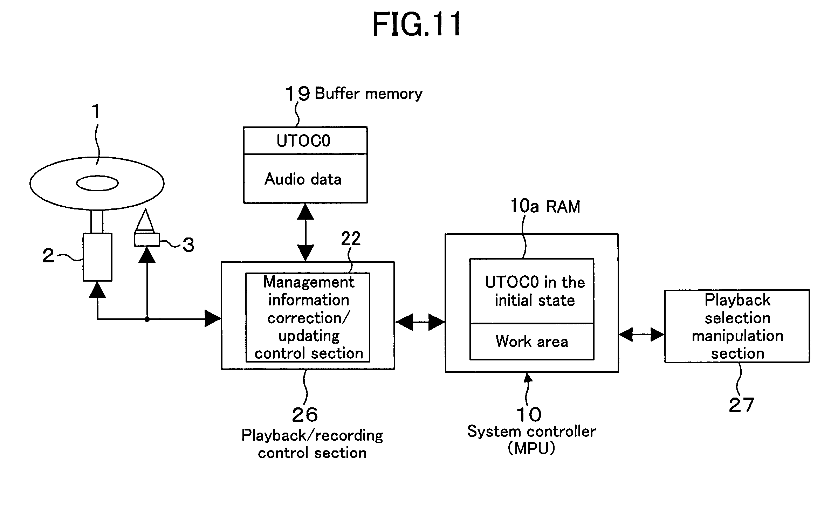

FIG. **11** is a block diagram of the management information correction device for a recording medium of this embodiment.

The device of this embodiment is additionally provided with a playback selection manipulation section (playback manipulation means) **27**, which outputs playback instruction information for instructing forcible playback of data starting from the data recording start position on the disc **1**. In this embodiment, also, a playback/recording control section **26** that includes the management information correction/updating control section **22** described in Embodiment 2 is provided. The playback/recording control section **26** additionally has a function capable of forcibly starting playback of data from the recordable user area start address RSTA as the data recording start position in response to the playback instruction information from the playback selection manipulation section **27**.

In this embodiment, therefore, when receiving a signal requesting start of playback from the recordable user area start address RSTA from the playback selection manipulation section **27,** the system controller **10** controls the replay/recording control section **26** to enable access to the recordable user area start address RSTA and start playback operation.

Subsequently, the user gives track marks in a predetermined manner, and the data of the corresponding table indicator data section and the management table section of the U-TOC sector 0 shown in FIG. **3**, which has been read from the disc **1** and held in the buffer memory **19**, is rewritten according to the track marks. In this way, correction can be made.

After completion of the playback, the user selects whether or not to update the U-TOC sector 0 on the disc **1** when the disc **1** is unloaded from the playback/recording apparatus in this embodiment, for example, to enable updating of the U-TOC sector 0 on the disc **1** to the corrected information of the U-TOC sector 0 held in the buffer memory **19**.

Accordingly, in this embodiment, even when data of the corresponding table pointer section and the management table section of the U-TOC sector 0 is corrupted, normal playback can be performed as long as data in the recordable user area is normal. Moreover, such a disc can be played back with other apparatuses by giving track marks in a predetermined manner and updating the U-TOC sector 0 to normal values.

### (Embodiment 7)

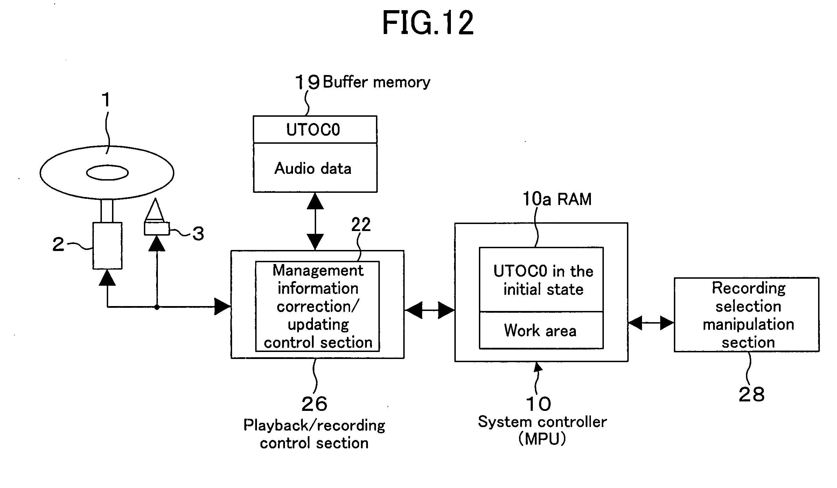

FIG. **12** is a block diagram of a management information correction device for a recording medium of Embodiment 7. Like Embodiment 6, the management information correction device of this embodiment is additionally provided with a recording selection manipulation section (recording manipulation means) **28**, which outputs recording instruction information for instructing forcible recording starting from the recordable user area start address RSTA as the data recording start position.

In this embodiment, recording operation can be performed in a manner as in the playback operation described in Embodiment 6. The operation is similar to that in Embodiment 6, and thus description thereof is omitted here.

When receiving a signal requesting start of recording from the recordable user area start address RSTA from the recording selection manipulation section **28**, the system controller **10** controls the replay/recording control section **26** to enable access to the recordable user area start address RSTA and start recording operation. Thereafter, as in the normal recording operation, the U-TOC sector 0 is updated based on the recorded data when the disc **1** is unloaded from the playback/recording apparatus, for example, after completion of the recording.

However, the recording in this embodiment means overwriting already recorded data. Therefore, there is provided the means for asking the user whether or not the recording is permitted with the recording selection manipulation section **28**.

Accordingly, in this embodiment, even when data of the U-TOC sector 0 is corrupted, normal recording can be performed. Moreover, such a disc can be used for playback/recording operation with other apparatuses.

In Embodiments 1 to 7 described above, the management information correction device for a recording medium of the present invention was implemented with the control of the system controller **10** of the playback/recording apparatus. The device can also be implemented as an exclusive device for management information updating independent of the playback/recording apparatus.

In the above embodiments, an MD was used as an example of the information recording medium. The present invention can also be applied to any system in which recording data is managed with management information. Naturally, the present invention is also applicable to a playback/recording apparatus using a recording medium other than disc-shaped recording media, such as a tape recording medium and a solid-state memory.

While the present invention has been described in preferred embodiments, it will be apparent to those skilled in the art that the disclosed invention may be modified in numerous ways and may assume many embodiments other than that specifically set out and described above. Accordingly, it is intended by the appended claims to cover all modifications of the invention which fall within the true spirit and scope of the invention.

## Claims

1. A management information correction device for a recording medium on which data and management information for managing playback or recording operation of the data are recorded, the device comprising:
correction manipulation means for outputting correction instruction information for correcting the management information under manipulation;
management information holding means for holding the management information in the initial state and the management information corresponding to the current recording medium; and
correction control means for correcting an abnormal portion of the management information corresponding to the current recording medium held in the management information holding means with reference to the management information in the initial state in response to the correction instruction information from the correction manipulation means.

2. The device of Claim 1, wherein the correction instruction information from the correction manipulation means includes updating instruction information for updating management information on the recording medium, and
the correction control means updates the management information on the recording medium to the corrected management information corresponding to the current recording medium in response to the correction instruction information from the correction manipulation means.

3. The device of Claim 2, further comprising detection means for detecting the setting state of recording permit/prohibit setting means placed on the recording medium for setting whether recording is permitted or prohibited,
wherein the correction control means does not update the management information on the recording medium to the corrected management information corresponding to the current recording medium when the detection means detects that the recording permit/prohibit setting means is in the recording prohibit state.

4. The device of Claim 2, wherein the correction manipulation means can output correction instruction information for selecting whether or not to execute the correction of an abnormal portion of the management information corresponding to the current recording medium held in the management information holding means with reference to the management information in the initial state and the updating of the management information on the recording medium to the corrected management information.

5. The device of Claim 2, wherein the correction instruction information output from the correction manipulation means includes return information for selectively instructing whether or not to return the current management information on the recording medium, which has been updated, to the management information before the updating,
the management information holding means keeps holding the current management information from the recording medium, and
the management information control means updates the management information on the recording medium and thereafter updates again the management information to the management information before the updating when the return information is included in the correction instruction information from the correction manipulation means.

6. The device of any of Claims 1, 2, 3 and 4, further comprising playback manipulation means for outputting playback instruction information instructing playback of data starting from a data recording start position when playback operation based on the management information fails after the correction of the current management information from the recording medium held in the management information holding means,
wherein the correction control means performs playback of data starting from the data recording start position on the recording medium in response to the playback instruction information from the playback manipulation means.

7. The device of any of Claims 1, 2, 3 and 4, further comprising recording manipulation means for outputting recording instruction information instructing recording of data starting from a data recording start position when recording operation based on the management information fails after the correction of the current management information from the recording medium held in the management information holding means,
wherein the correction control means performs recording of data starting from the data recording start position on the recording medium in response to the recording instruction information from the recording manipulation means.

8. The device of Claim 1, wherein when a header address included in the management information corresponding to the current recording medium is abnormal, the header address is corrected to a header address included in the management information in the initial state.
